# EUROPEAN PATENT APPLICATION

(11) **EP 3 582 175 A1**
(43) Date of publication of application: **18.12.2019**
(21) Application number: 18178034.7
(22) Date of filing: 15.06.2018
(51) Int. Cl.: G06Q 50/32, G06Q 10/08, G06Q 50/28

(54) **SYSTEM AND METHOD ALLOWING REGISTERED DELIVERY OF A PHYSICAL ITEM AT A DESTINATION ADDRESS**

(71) Applicant: Weymeersch, Steyn, 9230 Wetteren (BE); Elegheert, Veronique, 9230 Wetteren (BE)
(72) Inventor: Weymeersch, Steyn, 9230 Wetteren (BE)
(74) Representative: IP HILLS NV

(57) **Abstract**

A system allowing registered delivery of a physical item (108) at a destination address comprises a sorting centre unit (101), a contact database (102), a portable smart device (105), and a delivery registration database (103). The sorting centre unit (101) scans the destination address from the physical item (108), obtains matching contact information (111) of the destined receiver from the contact database (102), generates a notification message (112) informing the destined receiver on scheduled delivery of the physical item (108), and obtains from the destined receiver a signature (113) prior to delivery of the physical item (108). The sorting centre unit (105) also tags the physical item (108) with a unique item identifier (109). The portable smart device (105) scans the tag (109) on the physical item (108) upon arrival at the destination address, and obtains confirmation (117) that the signature (113) has been received from the destined receiver before allowing the delivery person to leave the physical item (108) at the destination address.

## Description

### Field of the Invention

The present invention generally relates to a system and method for registered delivery of a physical item, for instance a registered letter or parcel, to a destined receiver.

### Background of the Invention

When the delivery person of a registered sending arrives at the destination address at a point in time where the destined receiver or its authorized representative is absent, the delivery person cannot leave the registered sending at the destination address. In such situation, the delivery person typically has to leave a message at the destination address to inform the destined receiver on the attempt to deliver the registered sending and to inform the destined receiver on the address where the registered sending can be picked up, e.g. the nearest post office, as well as the time period wherein the registered sending will be available for pick-up at this address, e.g. the next two weeks. The delivery person must carry the registered sending back to the central location, e.g. the post office, where it will be contained temporarily. Upon valid identification and authorization, the destined receiver or his authorized representative can pick-up the registered sending. If the registered sending is not timely picked-up, it is typically sent back to the sender.

The traditional method for obtaining delivery confirmation on a registered sending is labour intensive and time consuming for the delivery person, e.g. the postman, who cannot deliver a high percentage of registered mails and parcels because of absence of the destined receiver at the time of arrival. Moreover, the known method is often frustrating on the destined receiver who has to visit the post office within the given time period and within the opening hours of that post office in order to pick up the registered sending. When the destined receiver arrives at the post office without a valid identity and/or without a valid authorisation, he will be refused to pick up the registered sending and will have to return at a later point in time. At the post office or central location, storage space must be provided for all undeliverable registered mail. As a result of the increase of online shopping and web based ordering of physical items, the storage space required to temporarily store all undeliverable parcels is growing steadily.

United States Patent Application US 2016/0379157 entitled "System and Method for Secure Proximity-Based Signatures for Parcel Delivery" recognizes the problem of absence of the authorized recipient of a parcel at the destination address in paragraph [0002]. US 2016/0379157 consequently describes a system that enables to obtain delivery confirmation from a person that is absent at the destination address. At the destination address, a dedicated device, the so-called Destination Validation Device or DVD 106, is installed and pre-configured with contact information of the person that should be contacted in case of parcel delivery. The Destination Validation Device DVD 106 has a sensor which upon arrival of the delivery person senses presence of a parcel and obtains metadata from the parcel. The obtained metadata is used by Destination Validation Device DVD 106 to prepare a delivery acknowledgement request that is sent to the person preregistered in DVD 106 in order to obtain a signature confirming the delivery.

US 2016/0379157 mainly aims at reducing the time spent by the delivery personnel at the destination address in order to stay on schedule for remaining parcels to be delivered rather than waiting for a signature at the destination location. The system known from US 2016/0379157 thereto relies on dedicated hardware, i.e. DVD 106, that must be installed by a technician at each house, apartment, office, etc., in an area where delivery personnel can approach it, and that further must be preconfigured with contact information. In absence of such DVD 106, it remains impossible to obtain a delivery confirmation.

United States Patent Application US 2005/0006470 A1, entitled "Proof of Presence and Confirmation of Parcel Delivery Systems and Methods" expresses the need for enhanced confirmation of delivery of a package, i.e. delivery confirmation that is more secure than a signature, because such proof of delivery of ordered items is often required for the release of payment for such items. The system described in US 2005/0006470 A1 relies on a unique location ID that can be scanned by the delivery person only while he/she is at the delivery location, hence confirming physical presence at the delivery location. Further, unique package IDs each associated with a package are scanned for each package delivered. The unique location ID and unique package IDs are linked to proof that the one or more packages have been delivered at the delivery location.

Although US 2005/0006370 A1 envisages to improve proof of delivery of packages, the system and method described therein do not involve the destined recipient or its authorized representative, let aside involve the destined recipient of the packages when he/she is absent at the destination location at the time of delivery. The confirmation process and system described in US 2005/0006370 A1 therefore does not provide an adequate solution for registered mail/parcels that require a signature of the destined recipient to establish legal proof of delivery.

United States Patent Application US 2017/0024693 A1, entitled "Setup of a Communication Link to a User Apparatus via an Access Control Apparatus" describes a method to control access to a parcel box for a delivery person, thus enabling the delivery person to safely deliver a parcel at a certain address. If the parcel box is not accessible upon arrival of the delivery personnel at the address, a device held by the delivery person will establish connection with the destined recipient to obtain authorisation to access the parcel box. A digital key enabling to open the parcel box is returned.

Although US 2017/0024693 A1 provides a solution for delivery of parcels in absence of the destined recipient at the delivery address, it relies on a parcel box and exchange of an access code for the parcel box. The process does not involve exchange of a signature of the destined recipient or its authorized representative and therefore provides no adequate solution for delivery of a registered letter or parcel with legal requirement to obtain a signature from an authorized person.

United States Patent Application US 2016/0292635 A1, entitled "Delivery Instructions on Delivery Location Detection Through a Wireless Beacon Device" solves the problem of providing delivery instructions to a delivery person at the destination address. This may be useful for instance in apartment buildings where multiple entities, e.g. persons, companies, etc., are located at a single address. A package is equipped with a beacon that tracks its location. When the beacon's location corresponds to the destination location of the package, delivery instructions are transferred from the beacon to the delivery person's device.

Although US 2016/0292635 A1 reduces the time delivery personnel may waste at the delivery address, the method and system described therein do not involve the destined recipient or its authorized representative. Consequently, no solution is provided for obtaining a signature or delivery confirmation from the destined recipient or its authorized representative in situations where such person is absent at the time of delivery.

### Summary of the Invention

It is an objective of the present invention to resolve one or more of the shortcomings of existing systems and methods for registered delivery of a physical item at a destined receiver. More particularly, it is an objective of the invention to reduce the time spent by delivery personnel at the destination address for obtaining a signature of the destined receiver and/or to establish that the destined person or authorized representative is absent. It is a further objective of the invention to reduce the number of physical items that must be taken back by delivery personnel to a central deposit where the absent destined receiver can pick it up at a later time. Consequently, it is an objective of the invention to reduce storage space required at such central deposit to temporarily store returned items, to reduce time spent by personnel at such central deposit to verify identification and authorization documents of the person picking up the item at a later moment, and to reduce frustration with persons picking up the item at a later time but accompanied by inappropriate identification and authorization documents.

In accordance with the invention, one or more of the above identified objectives are realized by embodiments of the system defined by claim 1, allowing registered delivery of a physical item at a destination address in absence of the destined receiver at the destination address, the system comprising a sorting centre unit with first scanner, a contact database, a portable smart device with second scanner, and a delivery registration database,
wherein the sorting centre unit is configured to:
- scan the destination address from the physical item or from a document attached thereto;
- match the destination address with contact information in the contact database and obtain matching contact information of the destined receiver;
- generate a notification message informing the destined receiver on scheduled delivery of the physical item;
- send the notification message to the destined receiver using the matching contact information;
- obtain from the destined receiver a signature prior to delivery of the physical item; and
- tag the physical item with a unique item identifier,
and wherein the portable smart device is further configured to:
- scan the unique tag on the physical item upon arrival at the destination address and extract therefrom the unique item identifier;
- consult the contact database using the unique item identifier and obtain therefrom confirmation that the signature has been received from the destined receiver for the physical item thereby allowing the delivery person to leave the physical item at the destination address or to obtain notification of absence of the signature; and
- register delivery of the physical item in the delivery registration database in case of confirmation that the signature has been received from the destined receiver.

Thus, in the mail sorting centre, the item or an accompanying document is scanned for the destination address and a unique tag is generated, for instance an RFID tag, QR-code or barcode, that is attached to the item, its packaging or a document accompanying the item. The purpose of the destination address scanning is to be able to contact the destined receiver and obtain his signature at any time prior to leaving the item at the destination address. Thereto, the scanned destination address is used to obtain contact information of a person authorized to receive a registered sending towards that destination address. The contact information is obtained from a contact database and for instance comprises a mobile telephone number, a fixed telephone number, an e-mail address, a skype name, or the like. The contact information is then used to establish contact with the destined receiver, notify this person that a registered sending is on its way and request a signature for delivery from the person. If the destined person replies to this notification with a digital signature prior to the delivery person arriving at the destination address, the delivery person shall be allowed to leave the registered sending at the destination address, even in absence of the destined person or any other authorized representative at the destination address at the point in time the delivery person arrives. The time between scanning the item in the sorting centre and arrival of the delivery person at the destination address is exploited to collect the destination person's signature. Only in situations where no signature has been obtained before arrival at the destination address, the delivery person will have to verify if the destined person or an authorized representative thereof is present at the destination address, or the delivery person will have to rely on alternate tools to establish contact with the destined person and obtain the signature while he is at the destination address. The overall time wasted at the destination address by delivery personnel to collect a signature or to establish that the destined receiver is absent, is significantly reduced. Also the number of items that must be returned to the central depository for later pick-up is significantly reduced and as a consequence thereof also the required space, effort, time and personal for managing temporary storage of returned items at the central depository reduces significantly. The unique tag that is attached to the item, its packaging or a document accompanying the item is used by the delivery person at the destination address. Upon arrival there, the delivery person scans the tag using the scanner that is integrated in or connected to his portable smart device. The scanned unique tag is then used by the delivery person's smart device to consult the contact database. If the contact database has obtained the destined receiver's signature, it shall inform the delivery person that the item can be left at the destination address. If the contact database has not yet received the destined receiver's signature, it shall inform the delivery person that no signature was received. This is a notification to the delivery person that the traditional procedure must be followed: the delivery person verifies if the destined person is at the destination address, obtains a signature of the destined person and hands over the item to the destined person, or the delivery person keeps the item and takes it back to the central depository in case the destined person is absent at the destination address. Optionally, in the latter situation where the destined receiver is absent at the destination address, the delivery person may obtain contact information of the destined receiver from the contact database and use this contact information to establish contact with the destined receiver and obtain a digital signature. If the delivery person succeeds in obtaining such digital signature while being at the destination address, he may still leave the item at the destination address. In any situation where the item is left at the destination address, the delivery person registers delivery of that item via his smart device in the registration database.

It is noticed that contact database in the above described system must be interpreted broadly to cover a database that maintains contact information of persons authorized to receive registered mail in relation to destination addresses, but which also maintains for which items a signature has been received from the destined receiver. The contact database hence does not necessarily represent a single storage or database, but may comprise multiple databases that respectively store and maintain contact information of possible destined persons as well as signatures of such destined persons for specific items.

In example embodiments of the system according to the invention, defined by claim 2, the delivery registration database is further configured to generate and send upon registration of the delivery of the physical item a delivery notification message to the destined receiver using the matching contact information.

This way, the destined receiver, who may have provided his signature for delivery of the item, hours or even days ahead of arrival of the item at the destination address, gets confirmation of the actual delivery at the destination address. The destined receiver this way is notified that he must check the spot where the item is left, for instance the mailbox, a parcel box, or any other location where a registered sending may be left, like for instance a neighbour, the backdoor, etc.

In example embodiments of the system according to the invention, defined by claim 3, the sorting centre unit is further configured to embed in the notification message one or more of:
- a picture of the physical item;
- an estimated date of delivery at the destination address;
- an estimated time of delivery at the destination address.

Indeed, advanced embodiments of the invention allow the sorting centre unit to use the contact information also to inform the destined receiver on the expected date and/or time of delivery. This enables the destined person to verify if it is needed to upfront provide his signature to anticipate for absence at the scheduled date/time at the destination address, or alternatively to not provide his signature upfront and organise presence at the scheduled date/time at the destination address. Advanced embodiments of the invention also inform the destined receiver on the item that will be delivered through a picture. Such picture enables the destined receiver to establish the nature of the item, e.g. an envelope containing a letter or a parcel of a certain size, and/or the origin of the registered sending. Such information could help the destined receiver to decide if presence at the destination address is preferred at the date/time of arrival, or alternatively, if presence is not needed and upfront provision of a signature is elected to avoid that the item must be picked up later at the central depository.

In example embodiments of the system according to the invention, defined by claim 4, the sorting centre is further configured to obtain from the destined receiver in conjunction with the signature a preferred delivery location for the physical item at or near the destination address.

Indeed, advanced embodiments of the system according to the invention allow the destined receiver to upfront provide his signature in relation to a registered sending, and to upfront indicate where this registered sending can be left by the delivery person. Examples of such delivery locations are the left neighbour, the right neighbour, the backdoor, the carport, a parcel panel in the mailbox, a hatch, etc. Information on the delivery location can then be shared with the delivery person's smart device in return to the delivery person scanning the unique tag at the destination address and reporting this scanned unique tag to the contact database.

In example embodiments of the system according to the invention, defined by claim 5 the portable smart device is further configured to scan a mailbox tag at the destination address and to extract therefrom a unique mailbox identifier.

When the mailbox at the destination address is tagged with a unique mailbox tag, for example a QR code, a barcode or RFID tag, scanning this maibox tag in addition to scanning the unique tag that accompanies the registered sending, provides further warranties that the delivery person has arrived at and left the registered sending at the proper destination address.

In example embodiments of the system according to the invention, defined by claim 6, the portable smart device is further configured to register in the delivery registration database one or more of:
- a picture of the physical item;
- a delivery date of the physical item;
- a delivery time of the physical item;
- location information of the portable smart device at the time of delivery of the physical item.

Thus, registration of the delivery at the destination address may be accompanied by additional information that establishes evidence that the registered sending was properly delivered at the destination address. The additional information may for instance comprise the date and time of delivery, obtained from a clock in the delivery person's smart device and automatically reported to the registration database. The additional information also may comprise the location of delivery, for instance the GPS coordinates obtained from a GPS receiver in the delivery person's smart device and automatically reported to the registration device. The additional information may also comprise a picture of the item that was left at the destination address. Such picture may be made by the delivery person using the camera of his smart device and may be uploaded automatically or upon instruction of the delivery person to the registration database. The skilled person shall appreciate that other types of information may be generated and send to the registration database, like for instance a description or picture of the spot where the registered sending was left, e.g. "at the left neighbour".

In example embodiments of the system according to the invention, defined by claim 7, the portable smart device is further configured in case of absence of the signature to:
- obtain the destination address;
- obtain contact information associated with the destination address from a contact database;
- use the contact information to establish a connection between the smart device and a user device of the destined receiver running a delivery confirmation application;
- receive from the user device an identification of the destined receiver and verify the identification at the smart device;
- receive from the user device a signature of the destined receiver thereby allowing the delivery person to leave the physical item at the destination address; and
- register delivery of the physical item in the delivery registration database.

Thus, upon arrival at the destination address and in absence of an upfront obtained signature and absence of the destined receiver at the destination location, the smart device carried by the delivery person under control of a delivery confirmation application may obtain the destination address in a last attempt to leave the registered sending and avoid storage and later pick-up at the central deposit. The delivery confirmation application may obtain the destination address or portions through scanning the unique tag accompanying the delivery item and consultation of a database, through interrogation of the delivery person, or through use of positioning technology available in the smart device. Using the destination address, the smart device of the delivery person thereupon obtains contact information related to the destination address from the contact database: this may be a telephone number, chat username, etc. of a person that is authorized to confirm delivery at that destination address, or it may be a list of telephone numbers, chat usernames, etc. of multiple persons that are authorized to confirm delivery for one or more entities located at the destination address. In the latter situation, the delivery person will have to select a single person out of the list that shall be contacted. The delivery person thereto may use information indicative for the destination mentioned on the letter, parcel or documents accompanying the parcel. The delivery person's smart device under control of the delivery confirmation application uses the contact information to establish a connection with the person authorized to confirm delivery. Typically, a data connection is established between the delivery confirmation application running on the delivery person's smart device and a delivery confirmation application running on the authorized person's smart device, e.g. his smart phone, table computer, laptop computer, desktop computer, etc. The contacted person is requested to transmit an identification and the identification is verified by the delivery confirmation application running on the delivery person's smart device. The identification may for instance comprise username/password, login information, a secret code or key, etc., that can be verified at the delivery person's smart device. After valid identification of the contacted person, i.e. after having verified that the contacted person corresponds to the registered person authorized to confirm delivery for the destined entity of the sending, this person is requested to send a digital signature. The digital signature shall then serve as confirmation for delivery and the delivery person is allowed to leave the sending at the destination address. The delivery confirmation application shall be able to register delivery in the delivery register. This registration may be again be accompanied by information such as the received digital signature, the date and time, an identification of the delivery person, a picture of the delivered item, the location of the smart device, etc.

In addition to a system as defined by claim 1, the present invention also concerns a corresponding method as defined by claim 8, allowing registered delivery of a physical item at a destination address in absence of the destined receiver at the destination address, the method comprising:
- a sorting centre unit scanning the destination address from the physical item or from a document attached thereto;
- the sorting centre unit matching the destination address with contact information in a contact database and obtaining matching contact information of the destined receiver;
- the sorting centre unit generating a notification message informing the destined receiver on scheduled delivery of the physical item;
- the sorting centre unit sending the notification message to the destined receiver using the matching contact information;
- the sorting centre unit obtaining from the destined receiver a signature prior to delivery of the physical item;
- the sorting centre unit tagging said physical item with a unique item identifier;
- a portable smart device held by the delivery person scanning the unique tag on the physical item upon arrival at the destination address and extracting therefrom the unique item identifier;
- the portable smart device consulting the contact database using the unique item identifier and obtaining therefrom confirmation that the signature has been received from the destined receiver for the physical item thereby allowing the delivery person to leave the physical item at the destination address or to obtain notification of absence of the signature; and
- the portable smart device registering delivery of the physical item in a delivery registration database in case of confirmation that the signature has been received from the destined receiver.

### Brief Description of the Drawings

Fig. 1 illustrates an embodiment of the system allowing registered delivery of a physical item according to the present invention; and
Fig. 2 illustrates a suitable computing system 200 for realizing one or several steps in embodiments of the method allowing registered delivery of a physical item according to the present invention.

### Detailed Description of Embodiment(s)

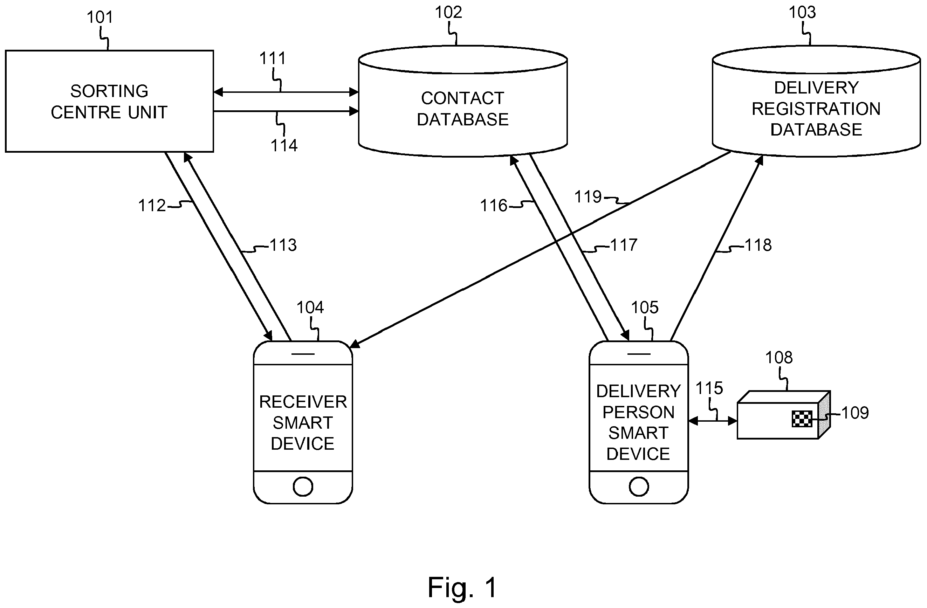

Fig. 1 shows an embodiment of the system allowing registered delivery of physical item 108 to a destined receiver, for instance a private person or legal entity, that is reachable via smart device 104. The system comprises a sorting centre unit 101, a contact database 102, a delivery registration database 103 and a smart device 105 carried by the delivery person that takes the physical item 108 to the destination address, i.e. the address of the destined receiver that is supposed to be indicated on the physical item, its packaging or an accompanying delivery document.

In the sorting centre where also the sorting centre unit 101 is located, for instance a mail distribution centre, a scanner that is integrated in or connected to the sorting centre unit 101 scans the destination address and possibly also the identification of the destined receiver from the physical item, its packaging, or the accompanying document.

The scanned destination address, and possibly the scanned identification of the destined receiver, are then used by the sorting centre unit 101 to consult the contact database 102 and obtain from the contact database 102 contact information of the destined receiver. This is indicated by arrow 111 in Fig. 1. The contact information obtained from contact database 102 may comprise a fixed or mobile telephone number, an e-mail address, a Skype address, a username that can be used to establish contact with the destined receiver through a dedicated application wherein the destined receiver has upfront registered, etc.

As is indicated by arrow 112 in Fig. 1, the sorting centre unit 101 uses the obtained contact information to establish contact with the destined receiver, typically through a call or message to a smart device 104 of the destined receiver. The smart device may for instance be a smart phone, a tablet computer, a laptop computer, a desktop computer, a smart watch, smart glasses, etc. Through communication 112, the sorting centre unit 101 informs the destined receiver that a registered sending is on its way for delivery. The communication 112 may for instance be an SMS message, an e-mail, a chat message, a message within a dedicated application, etc. In addition to informing the destined receiver of the scheduled registered delivery of a physical item 108, this communication may inform the destined receiver of the scheduled delivery date and delivery time, and shall request the destined receiver to upfront provide a signature as confirmation for the delivery. The communication 112 optionally may contain additional information, like for instance the type of item, e.g. a letter or a parcel, a picture of the item, an identification of the sender or origin of the registered sending, etc.

In return to the delivery announcement 112, the destined receiver can provide his signature 113 upfront, i.e. any time before the sending arrives at the destination address. The destined receiver's signature is sent directly to the contact database 102 or, as is indicated in Fig. 1 through arrow 113, to the sorting centre unit 101 whereupon the later informs the contact database 102 that the signature has been received from a certain contact in relation to a certain, scheduled delivery. The latter information between the sorting centre unit 101 and the contact database 102 is denoted 114 in Fig. 1. Together with his signature, the destined receiver may indicate in message 113 where he prefers the delivery item is left. For example, the destined receiver may indicate that he prefers the delivery item to be left in a parcel hatch of a mailbox, near the backdoor, under a carport, with one of the neighbours, etc. If message 113 contains such information, this information is kept in the contact database 102.

Before the physical item leaves the sorting centre, the sorting centre unit 101 tags the physical item, its packaging or an accompanying document with a unique identifier 109, for example a barcode, a QR code or an RFID tag. This unique identifier 109 stays with the delivery item 108 and shall be scanned by the delivery person when he arrives at the destination address, as is indicated by arrow 115.

At the destination address, the delivery person hence uses a smart device 105 with scanner, for instance his smartphone or a dedicated portable terminal with integrated scanner, to scan the unique identifier 109 that was tagged onto the delivery item 108, its packaging or an accompanying document. In addition, the delivery person in embodiments of the system scans a second unique identifier that is tagged onto the mailbox or at least is made visible at the destination address. This second unique identifier is a unique identifier for the location or address of the destined receiver. When both unique identifiers are sent to the contact database 102, as is indicated by arrow 116, the contact database is informed of the fact that delivery person has arrived at the destination address with the delivery item.

Upon receipt of message 116, the contact database 102 verifies if a signature has been received from the destined receiver for the scheduled delivery. If this is the case, the contact database 102 informs the delivery person via message 117 that a signature has been received and the delivery item 108 can be left at the destination address. Message 117 may further convey information indicative for the preferred spot where the delivery person can leave the delivery item 108, for instance with one of the neighbours, near the backdoor, under a carport, etc., provided this information was upfront communicated by the destined receiver.

As soon as the delivery person has left the delivery item 108 at the destination address, he registers delivery through his smart device 105 sending a registration message 118 to the delivery registration database 103. The registration message 118 may be supplemented with a picture of the physical item 108 at the location where it was left, with location coordinates of the smart device 105 if the smart device contains positioning technology like a GPS receiver, the date and time of delivery as obtained from a clock integrated in the delivery person's smart device 105.

The delivery registration database 103 at last optionally informs the destined receiver that the delivery item was left at the destination address via a message 119 sent to the destined receiver's smart device 104. Again, this message may be an SMS message, a chat message, a message sent to a dedicated application running on the receiver's smart device 104, etc. Message 119 terminates the registered delivery of physical item 108 at its destination address.

In the alternative situation where the contact database 102, upon receipt of message 116 conveying the unique identification 109 scanned from the delivery item 108 has not yet received a signature from the destined receiver, two possibilities exist: either the delivery person takes the delivery item 108 back to a central deposit for later pick-up by the destined receiver or the delivery person uses his smart device 105 in an additional attempt to get in touch with the destined receiver and receive therefrom the necessary signature. In order to receive the necessary signature, the delivery person may activate an application on his smart device 105 that uses the scanned identifier 109 of the delivery item 108 or the destination address to obtain contact information of the destined receiver from the contact database 102. Using this contact information, the delivery person's smart device 105 under control of the application then contacts the destined receiver's smart device 104 whereon a client application is running. Via this client application the destined receiver transmits an identification and a digital signature to the delivery person's smart device 105. The application running on the delivery person's smart device 105 verifies the identity of the destined receiver, and upon receipt of the digital signature, informs the delivery person that the delivery item 108 can be left at the destination address. In the communication between the destined receiver's smart device 104 and the delivery person's smart device 105, the destined receiver can indicate where he prefers the delivery item 108 to be left by the delivery person. The application running on the delivery person's smart device 105 terminates the registered delivery through registration in the delivery registration database 103 that the delivery item 108 was delivered. this registration may be accompanied by additional information such as position coordinates of the delivery person's smart device 105 at the time of delivery, the date and time of delivery, a picture of the delivery item at the location where it was left, etc. This way, it is avoided that the delivery item must be taken back to the central depository for later pick-up by the delivery person.

In situations where the destined receiver has not upfront provided his signature, and the destined receiver is not reachable by the delivery person through the dedicated application using the contact information obtained from contact database 102, the delivery item 108 will be taken back to the central depository for later pick-up by the destined receiver.

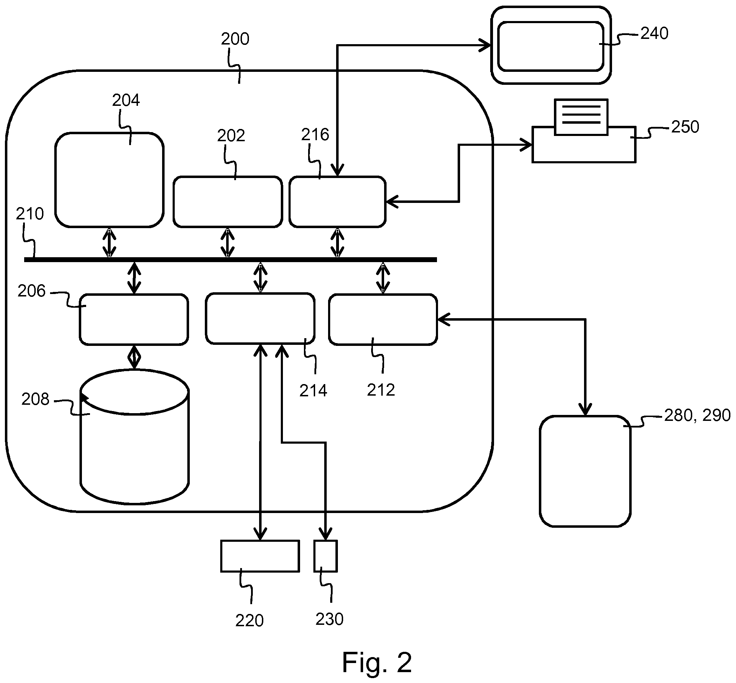

Fig. 2 shows a computing system 200 suitable for implementing one or several steps of the above described embodiment of the invention. Computing system 200 may for example represent the sorting centre unit 101 in embodiments of the invention or it may represent the delivery person's smart device 105 in embodiments of the invention. Computing system 200 may in general be formed as a suitable general-purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system 200. Processor 202 may include any type of conventional processor or microprocessor that interprets and executes programming instructions. Local memory 204 may include a random-access memory (RAM) or another type of dynamic storage device that stores information and instructions for execution by processor 202 and/or a read only memory (ROM) or another type of static storage device that stores static information and instructions for use by processor 202. Input interface 214 may comprise one or more conventional mechanisms that permit an operator to input information to the computing device 200, such as a keyboard 220, a mouse 230, a touch sensitive display, a pen, voice recognition and/or biometric mechanisms, etc. Output interface 216 may comprise one or more conventional mechanisms that output information to the operator, such as a display 240, etc. Communication interface 212 may comprise any transceiver-like mechanism such as for example one or more Ethernet interfaces that enables computing system 200 to communicate with other devices and/or systems, for example with other computing devices 280, 290. The communication interface 212 of computing system 200 may be connected to such another computing system by means of a local area network (LAN) or a wide area network (WAN) such as for example the internet. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example SATA disk drives, and control the reading and writing of data to and/or from these storage elements 208. Although the storage elements 208 above is described as a local disk, in general any other suitable computer-readable media such as a removable magnetic disk, optical storage media such as a CD or DVD, -ROM disk, solid state drives, flash memory cards, ... could be used. The system 200 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A system allowing registered delivery of a physical item (108) at a destination address in absence of the destined receiver at said destination address, said system comprising a sorting centre unit (101) with first scanner, a contact database (102), a portable smart device (105) with second scanner, and a delivery registration database (103),
wherein said sorting centre unit (101) is configured to:
- scan said destination address from said physical item (108) or from a document attached thereto;
- match said destination address with contact information in said contact database (102) and obtain matching contact information (111) of said destined receiver;
- generate a notification message (112) informing said destined receiver on scheduled delivery of said physical item (108);
- send said notification message (112) to said destined receiver using said matching contact information (111);
- obtain from said destined receiver a signature (113) prior to delivery of said physical item (108); and
- tag said physical item (108) with a unique item identifier (109),
and wherein said portable smart device (105) is further configured to:
- scan said unique tag (109) on said physical item (108) upon arrival at said destination address and extract therefrom said unique item identifier (109);
- consult said contact database (102) using said unique item identifier (109) and obtain therefrom confirmation (117) that said signature (113) has been received from said destined receiver for said physical item (108) thereby allowing said delivery person to leave said physical item (108) at said destination address or to obtain notification of absence of said signature; and
- register delivery of said physical item (108) in said delivery registration database (103) in case of confirmation that said signature (113) has been received from said destined receiver.

2. The system according to claim 1, wherein said delivery registration database (103) is further configured to generate and send upon registration of said delivery of said physical item (108) a delivery notification message (119) to said destined receiver using said matching contact information.

3. The system according to claim 1, wherein said sorting centre unit (101) is further configured to embed in said notification message (112) one or more of:
- a picture of said physical item (108);
- an estimated date of delivery at said destination address;
- an estimated time of delivery at said destination address.

4. The system according to claim 1, wherein said sorting centre unit (101) is further configured to obtain from said destined receiver in conjunction with said signature (113) a preferred delivery location for said physical item (108) at or near said destination address.

5. The system according to claim 1 wherein said portable smart device (105) is further configured to scan a mailbox tag at said destination address and to extract therefrom a unique mailbox identifier.

6. The system according to claim 1 wherein said portable smart device (105) is further configured to register in said delivery registration database (103) one or more of:
- a picture of said physical item (108);
- a delivery date of said physical item (108);
- a delivery time of said physical item (108);
- location information of said portable smart device (105) at the time of delivery of said physical item (108).

7. The system according to claim 1 wherein said portable smart device (105) is further configured in case of absence of said signature to:
- obtain said destination address;
- obtain contact information associated with said destination address from said contact database (102);
- use said contact information to establish a connection between said smart device (105) and a user device (104) of said destined receiver running a delivery confirmation application;
- receive from said user device (104) an identification of said destined receiver and verify said identification at said smart device (105);
- receive from said user device (104) a signature of said destined receiver thereby allowing said delivery person to leave said physical item (108) at said destination address; and
- register delivery of said physical item (108) in said delivery registration database (103).

8. A method allowing registered delivery of a physical item (108) at a destination address in absence of the destined receiver at said destination address, the method comprising:
- a sorting centre unit (101) scanning said destination address from said physical item (108) or from a document attached thereto;
- said sorting centre unit (101) matching said destination address with contact information in a contact database (102) and obtaining matching contact information (111) of said destined receiver;
- said sorting centre unit (101) generating a notification message (112) informing said destined receiver on scheduled delivery of said physical item (108);
- said sorting centre unit (101) sending said notification message (112) to said destined receiver using said matching contact information (111);
- said sorting centre unit (101) obtaining from said destined receiver a signature (113) prior to delivery of said physical item (108);
- said sorting centre unit (101) tagging said physical item (108) with a unique item identifier (109);
- a portable smart device (105) held by said delivery person scanning said unique tag (109) on said physical item (108) upon arrival at said destination address and extracting therefrom said unique item identifier (109);
- said portable smart device (105) consulting said contact database (102) using said unique item identifier (109) and obtaining therefrom confirmation that said signature (113) has been received from said destined receiver for said physical item (108) thereby allowing said delivery person to leave said physical item (108) at said destination address or to obtain notification of absence of said signature; and
- said portable smart device (105) registering delivery of said physical item (108) in a delivery registration database (103) in case of confirmation that said signature has (113) been received from said destined receiver.
